Europäisches Patentamt

European Patent Office

Office européen des brevets

(19)

(11) Veröffentlichungsnummer: **0 278 117 B1**

# (12) EUROPÄISCHE PATENTSCHRIFT

(45) Veröffentlichungstag der Patentschrift: **04.09.91**

(21) Anmeldenummer: **87119360.3**

(22) Anmeldetag: **30.12.87**

(51) Int. Cl.⁵: $F02B\ 27/00$

(54) Kolbenbrennkraftmaschine mit durch Frischgas-Resonanzschwingungen gesteigertem Liefergrad.

(30) Priorität: **12.02.87 HU 54687**
**23.07.87 HU 54687**

(43) Veröffentlichungstag der Anmeldung:
**17.08.88 Patentblatt 88/33**

(45) Bekanntmachung des Hinweises auf die
Patenterteilung:
**04.09.91 Patentblatt 91/36**

(84) Benannte Vertragsstaaten:
**AT BE CH DE ES FR GB GR IT LI LU NL SE**

(56) Entgegenhaltungen:
**WO-A-82/01742**
**DE-A- 2 949 790**
**DE-A- 3 232 366**

(73) Patentinhaber: **Autoipari Kutato és Fejlesztö
Vállalat
Csoka utca 7-13
Budapest XI(HU)**

(72) Erfinder: **Cser, Gyula, Dr. Dipl.-Ing.
Gardonyi Géza ut 20/a
HU-1026 Budapest(HU)**
Erfinder: **Csikos, Antal, Dipl.-Ing.
Erdliget, Terasz u. 11
HU-2030 Budapest(HU)**
Erfinder: **Timar, Péter, Dipl.-Ing.
Tanacs krt. 7
HU-1075 Budapest(HU)**

(74) Vertreter: **Patentanwälte Viering & Jentschura
Steinsdorfstrasse 6
W-8000 München 22(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Beschreibung

Die Erfindung betrifft eine Kolbenbrennkraftmaschine mit durch Frischgas-Resonanzschwingungen gesteigertem Liefergrad, mit einem Frischgasleitungssystem, welches ein Speiseresonanzsystem mit einem Speiseresonatorbehälter, an welchen höchstens vier Zylinder, deren Ansaugperioden einander nicht oder nicht wesentlich überlappen, mit ihren Einlaßöffnungen direkt angeschlossen sind, und einem in dem Speiseresonatorbehälter mündenden Speiseresonanzrohr aufweist, durch dessen dem Speiseresonatorbehälter abgewandtes Rohrende das Frischgas für die Speisung der angeschlossenen Zylinder eintritt. Durch die diskontinuierliche Saugwirkung der Zylinder entstehen im Speiseresonatorbehälter und dem Speiseresonanzrohr Frischgasschwingungen, unter deren Wirkung im Bereich einer vorbestimmten Resonanzdrehzahl, deren Wert von den Abmessungen des Frischgasleitungssystems abhängig ist, der Liefergrad der Kolbenbrennkraftmaschine wesentlich gesteigert wird. Die Frequenz dieser Frischgasschwingungen sind wesentlich kleiner und deren Amplituden wesentlich größer als die im Frischgasleitungssystem ebenfalls angeregten Schalldruckschwingungen, die sich mit den Frischgas-Resonanzschwingungenzwar überlagern, in ihrer Wirkung aber gegenüber den Frischgas-Resonanzschwingungen deutlich zurückbleiben.

Die Grundlösung für eine solche "Resonanzaufladung" einer Kolbenbrennkraftmaschine ist aus der DE-C-19 35 155 und aus der DE-C-22 45 732 bekannt. Durch Auswahl der Abmessungen des Speiseresonanzsystems ist es möglich, die Reasonanzstelle in einen beliebigen Betriebsdrehzahlbereich, insbesondere in den unteren Drehzahlbereich der Brennkraftmaschine zu legen, so daß die Resonanzaufladung mit einer Abgas-Turboaufladung kombiniert werden kann, deren Höchstwirkung in den Nenndrehzahlbereich gelegt ist. Dieses bekannte Resonanzaufladungssystem kann am wirkungsvollsten und vorteilhaftesten bei Sechszylinder-Reihenmotoren verwendet werden, indem jeweils diejenigen drei Zylinder, deren Ansaugperioden einander nicht überlappen, an einen ihnen gemeinsamen Speiseresonatorbehälter angeschlossen werden und die beiden Speiseresonanzsysteme über einen Ausgleichsbehälter, in welchen die beiden Speiseresonanzrohre münden und der mit einem Frischgasanschluß versehen ist, miteinander gekoppelt werden.

Bei Brennkraftmaschinen mit bis zu beispielsweise vier Zylindern hingegen kann eine wirksame Resonanzaufladung dadurch erreicht werden, daß zusätzlich zu dem Speiseresonanzsystem ein Zusatzresonanzsystem aus einem geschlossenen Zusatzresonatorbehälter und einem in diesen mündenden Zusatzresonanzrohr vorgesehen wird, welches über einen Zwischenbehälter, in welchen ein Frischgasanschluß mündet, an das Speiseresonanzrohr des Speiseresonanzsystems angeschlossen ist. Hierbei können das Speiseresonanzsystem und das Zusatzresonanzsystem in ihren Abmessungen derart aufeinander abgestimmt werden, daß bei einer vorbestimmten Resonanzdrehzahl der Brennkraftmaschine die durch die diskontinuierliche Saugwirkung der Zylinder im Frischgasleitungssystem angeregten Frischgasschwingungen in dem Speiseresonanzrohr unter Steigerung des Liefergrades phasengleich sind, d.i. die Gasströmungen im Speiseresonanzrohr und im Zusatzresonanzrohr nach Geschwindigkeit und Richtung miteinander übereinstimmen. Dieser Vorschlag ist aus der DE-B-29 49 790 bekannt und ermöglicht es, den Zwischenbehälter möglichst klein auszuführen, so daß dieser bei den beengten Platzverhältnissen im Motorraum ohne Schwierigkeiten angeordnet werden kann.

Bei jeder der beschriebenen Ausführungsformen des Frischgasresonanzsystems ist eine bestimmte Resonanzfrequenz vorhanden, welche durch die Auswahl der Abmessungen der Resonatorbehälter und Resonanzrohre in einen vorbestimmten, gewünschten Betriebsdrehzahlbereich gelegt werden kann. Jedoch kann auch eine drehzahlabhängige Veränderung der Resonanzfrequenz dadurch erreicht werden, daß die Abmessungen des Resonanzsystems drehzahlabhängig geändert werden. So ist es aus dem JP-U-59-22 249 bekannt, das Resonanzrohr in seiner Länge drehzahlabhängig zu verstellen. Ferner ist es bekannt, die eine Wand des Resonatorbehälters mit einem Kolben zu begrenzen, der unter Änderung des Volumens des Resonatorbehälters drehzahlabhängig verstellt wird. Nach der DE-A-33 14 911 werden zwei Resonanzrohre über eine kurze Verbindungsleitung miteinander verbunden, in welcher eine Ventilklappe angeordnet ist, die drehzahlabhängig verstellt wird, so daß durch das Öffnen oder Schließen der Ventilklappe zwei unterschiedliche Resonanzfrequenzen vorliegen. Derartige Verstellkonstruktionen zur Erzielung mehrerer unterschiedlicher Resonanzfrequenzen zur Verbesserung der Drehmomentenkurve sind jedoch im Vergleich zu den erreichbaren Vorteilen sehr kostspielig und mit konstruktiven sowie betriebsmäßigen Schwierigkeiten verbunden.

Durch die Erfindung wird erreicht, eine Kolbenbrennkraftmaschine mit einem Frischgasleitungssystem zu schaffen, in welchem Frischgas-Resonanzschwingungen bei zwei unterschiedlichen Resonanzdrehzahlen des Betriebsdrehzahlbereiches auftreten, ohne daß hierzu Verstellkonstruktionen zur gesteuerten Änderung der Abmessungen des Frischgasleitungssystems erforderlich sind und ohne daß der Konstrukteur in der freien Auswahl der Resonanzdrehzahlen beschränkt ist. Hierdurch ist es möglich, das Resonanzschwingungssystem auf einen gewünschten Verlauf der Liefergradkurve und daher der Drehmomentenkurve über den Betriebsdrehzahlbereich hin auszulegen.

Die Erfindung beruht auf der Erkenntnis, daß die genannte Aufgabe mit einem Frischgasleitungssystem mit dem grundsätzlichen Aufbau nach der DE-B-29 49 790 gelöst wird, wenn auch der den Frischgasanschluß aufweisende Zwischenbehälter in das Resonanzsystem mit einbezogen wird.

Daher weist das Frischgasleitungssystem der erfindungsgemäßen Kolbenbrennkraftmaschine ein Speiseresonanzsystem mit einem Speisesresonatorbehälter, an welchen höchstens vier Zylinder, deren Ansaugperioden einander nicht oder nicht wesentlich überlappen, mit ihren Einlaßöffnungen direkt angeschlossen sind, und einem in den Speiseresonatorbehälter mündenden Speiseresonanzrohr sowie ein Zusatzresonanzsystem aus einem geschlossenen Zusatzresonatorbehälter und einem in diesen mündenden Zusatzresonanzrohr auf, welches über einen Zwischenbehälter, in welchen ein Frischgasanschluß mündet, an das Speiseresonanzrohr angeschlossen ist. Das Speiseresonanzsystem und das Zusatzresonanzsystem sind in ihren Abmessungen derart aufeinander abgestimmt, daß bei einer vorbestimmten Resonanzdrehzahl der Brennkraftmaschine die durch die diskontinuierliche Saugwirkung der Zylinder im Frischgasleitungssystem angeregten Frischgasschwingungen in dem Speiseresonanzrohr und dem Zusatzresonanzrohr unter Steigerung des Liefergrades phasengleich sind. Gemäß der Erfindung ist weiter der Zwischenbehälter als derartiger Zwischenresonatorbehälter ausgelegt, daß die Frischgasschwingungen in dem Speiseresonanzrohr und dem Zusatzresonanzrohr bei einer vorbestimmten zweiten Resonanzdrehzahl der Brennkraftmaschine unter Steigerung des Liefergrades gegenphasig sind.

Nach der DE-B-29 49 790 kommt es auf die Größe des Volumens des Zwischenbehälters nicht an, so daß der Zwischenbehälter aus Platzgründen möglichst klein gehalten wird. Wenngleich es daher auch dort, jedoch nur theoretisch, eine zweite Resonanzdrehzahl gibt, bei welcher die Schwingungen im Speiseresonanzrohr und Zusatzresonanzrohr gegenphasig sein würden, liegt diese zweite Resonanzstelle wegen der kleinen Baugröße des Zwischenbehälters für das bekannte Frischgasleitungssystem weit außerhalb des Betriebsdrehzahlbereichs der Brennkraftmaschine, da der Motor bei dieser zweiten Resonanzdrehzahl oder nahe derselben nicht funktionsfähig ist, so daß der Resonanzzustand bei dieser zweiten Resonanzdrehzahl bei dem Betrieb der Brennkraftmaschine nicht auftritt und nicht zu Steigerung des Liefergrades der Brennkraftmaschine ausgenutzt werden kann. Demgegenüber hat der Zwischenbehälter des erfindungsgemäßen Frischgasleitungssystems ein deutlich größeres Volumen, dessen Mindestgröße dadurch bestimmt ist, daß die zweite Resonanzstelle innerhalb des Betriebsdrehzahlbereiches zu liegen kommt und daher zur Steigerung des Liefergrades innerhalb des Betriebsdrehzahlbereiches der Brennkraftmaschine ausnutzbar ist.

Wie bereits in der Einleitung erwähnt, bezieht sich die Erfindung auf die Weiterentwicklung eines Motors mit einem aufgrund derjenigen Resonanzerscheinung funktionierenden Frischgasleitungssystem, bei dem die Ansaugperioden der am Resonatorbehälter angeschlossenen Zylinder einander nicht wesentlich überlappen. Diese Bedingung ist durch diejenigen Motoren mit Sicherheit erfüllt, deren Zylinderanzahl vier beträgt, wobei der Zündabstand beim Vierzylindermotor ein Kurbelwinkel von 180° ist und der Winkel des Offenhaltens des Ansaugventils den Kurbelwinkel von 180° nicht in bedeutendem Maße überschreitet. Diejenige Vorbedingung, daß sich die Ansaugperioden der einzelnen Zylinder nicht wesentlich überlappen, ist sowohl aus dem Gesichtspunkt der Erregung des Schwingungssystems als auch der die Zylinderfüllung mit den entstehenden Gasschwingungen verbessernden Ausnutzung der Schwingungen wichtig. Ein Überlappen der Ansaugperioden bildet kein Hindernis gegen das Entstehen von Resonanzgasschwingungen, verdirbt aber bedeutsam die Wirksamkeit des Zylinderfüllens im Vergleich dazu, was mit der Resonanzerscheinung ohne Überlappen der Ansaugperioden erreicht werden kann. Da die Verminderung der maximalen Wirksamkeit bei einer Überlappung der Ansaugperioden dadurch verursacht wird, daß während der Ansaugperiode des einen Zylinders das Ansaugventil eines anderen Zylinders bereits zu öffnen beginnt, ist dadurch auch die Geschwindigkeit des Vergrößerns des Öffnungsquerschnitts ein beeinflussender Faktor. Bei verschiedenen Motorkonstruktionen ist die Vergrößerungsgeschwindigkeit unterschiedlich, was bei der Feststellung, ob das Überlappen der Ansaugperioden wesentlich ist oder nicht, zu berücksichtigen ist.

Aufgrund der obigen Ausführungen bezieht sich die Erfindung auch auf einen Viertakt-Fünfzylinder-Reihenmotor, bei dem die Zylinder-Ansaugperioden, die gleichmäßig um einen Kurbelwinkel von 144° der Kurbelwelle aufeinander folgen, einander nicht wesentlich überlappen, wodurch sich der Ausfüllungsfaktor der Zylinder mit dem erfindungsgemäßen Frischgasleitungssystem erhöht, obwohl dasjenige Niveau nicht erreicht wird, welches der Viertakt-Vierzylinder-Reihenmotor mit einem Zündabstand von 180° Kurbelwinkel aufweist.

Das erfindungsgemäße Frischgasleitungssystem einer Kolbenbrennkraftmaschine ist aus der Zeichnung in vier Ausführungsformen schematisch ersichtlich. In der Zeichnung zeigen:

Fig. 1 eine Ausführungsform, bei welcher das Frischgas unmittelbar aus der Umgebungsatmosphäre augesaugt wird,

Fig. 2 and 3 Ausführungsformen, bei welchen das Frischgas von einem Turbolader geliefert wird, und

Fig. 4 eine Ausführungsform für eine Viertakt-Kolbenbrennkraftmaschine mit fünf Zylindern als Reihenmotor, angeschlossen an einen Abgas-Turbolader.

Die in der Zeichnung gezeigt Viertakt-Vierzylinder-Kolbenbrennkraftmaschine 1 hat einen Zündabstand von 180° Kurbelwinkel, d.h. die Saugtakte der Zylinder 2 der Maschine 1 überlappen sich nicht oder nicht wesentlich. Die Einlaßöffnungen 4 der Zylinder 2 der aus diesen mit ihren Ansaugperioden sich nicht oder nicht wesentlich überlappenden Zylindern gebildeten Zylindergruppe sind unter Zwischenschaltung jeweils eines Verbindungsrohres 5 für jeden Zylinder 2 einzeln an einen gemeinsamen Speiseresonatorbehälter 6 angeschlossen, in welchen ein Speiseresonanzrohr 7 mündet, durch welches das Frischgas zugeführt wird. Ferner ist ein Zusatzresonanzsystem aus einem Zusatzresonatorbehälter 12 und einem in diesen mündenden Zusatzresonanzrohr 11 vorgesehen, welches über einen Zwischenresonatorbehälter 8 mit dem Speiseresonanzrohr 7 verbunden ist.

Aufgrund der Auslegung des Speiseresonanzsystems und des Zusatzresonanzsystems einerseits sowie des Zwischenresonatorbehälters 8 in dessen Größe andererseits gibt es innerhalb des Betriebsdrehzahlbereiches der Brennkraftmaschine 1 zwei Resonanzstellen, bei denen der Liefergrad der Brennkraftmaschine 1 aufgrund der pneumatischen Gasschwingungen im Frischgasleitungssystem in zwei unterschiedlichen Betriebsdrehzahlbereichen der Brennkraftmaschine 1 vergrößert wird. Bei der ersten Resonanzstelle kommt es aufgrund des Einbauens des Zusatzresonanzsystemes 11, 12 dazu, daß die Schwingungen des in den Zwischenresonatorbehälter 8 eingeführten Frischgases sowohl in dem Speiseresonanzrohr 7 als auch in dem Zusatzresonanzrohr 11 nach Amplitude, Geschwindigkeit und Richtung gleich sind, hingegen aufgrund der Größe des Zwischenresonatorbehälters 8 bei einer von der ersten Resonanzstelle verschiedenen zweiten Resonanzstelle bei gleicher Geschwindigkeit und Amplitude einander entgegengesetzte Schwingungsrichtungen aufweisen. In beiden Fällen kommt es aufgrund der Schwingungszustände in dem Frischgasleitungssystem zu einer Steigerung des Liefergrades der Zylinder 2 der Brennkraftmaschine 1.

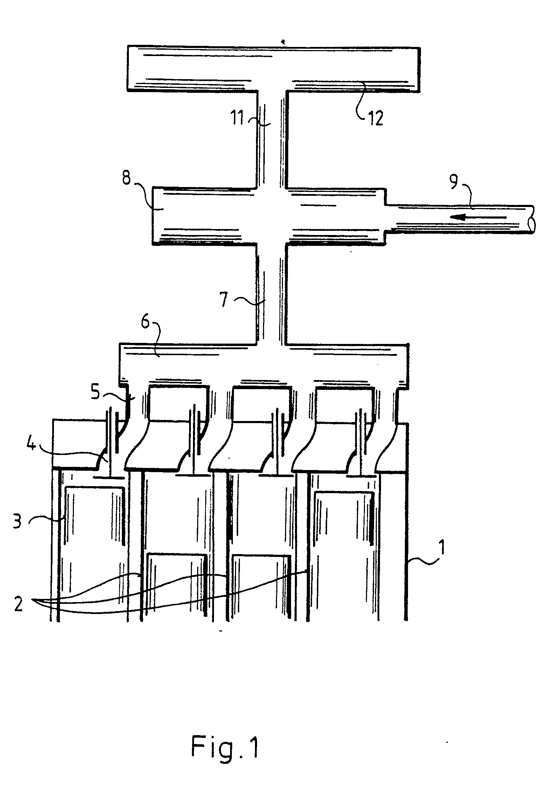

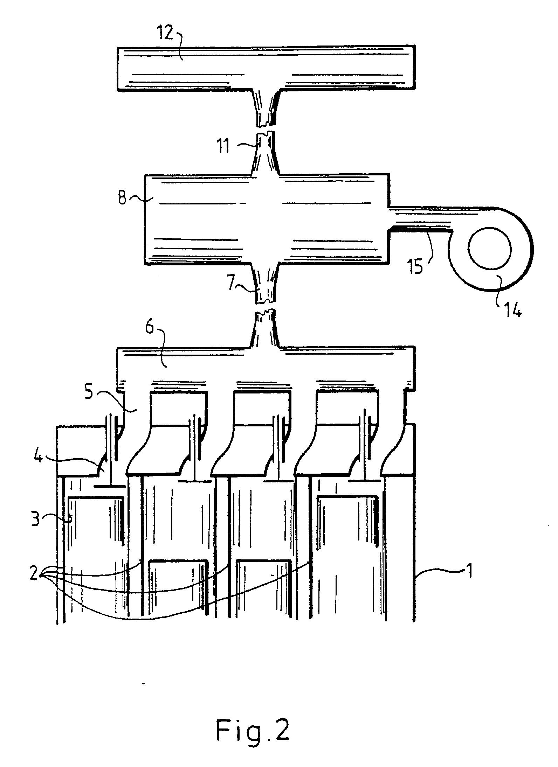

Um dieses Resonanzverhalten bei der Ausführungsform aus Fig. 1 zu ermöglichen, bei welcher das Frischgas aufgrund der Bewegung der Kolben 3 in den Zylindern 2 aus der Umgebungsatmosphäre direkt angesaugt wird, ist an den Zwischenresonatorbehälter 8 als Frischgasanschluß ein Rohr 9 angeschlossen, welches mit dem Zwischenresonatorbehälter 8 als Resonanzrohr oder als langes Rohr zusammenwirkt. Bei der Ausführungsform aus Fig. 2 hingegen wird der in den Zwischenresonatorbehälter 8 mündende Frischgasanschluß von dem Druckrohr 15 einer das Frischgas liefernden Aufladevorrichtung, in unserem Fall eines Kompressors 14 eines Abgasturboladers geliefert.

Außerdem sind bei der Ausführungsform aus Fig. 2 die beiden Endabschnitte 7a bzw. 11a der Resonanzrohre 7, 11 sich zu den Rohrenden hin diffusorartig erweiternd ausgebildet, wodurch die Länge der Resonanzrohre 7, 11 ohne Änderung der Resonanzstellen des Frischgasleitungssystems verkürzt werden kann. Als mechanisches Ersatzsystem des durch die Erfindung erzielten Gasschwingungssystems kann das System aus Feder-Masse-Feder-Masse-Feder dienen, welches an der ersten Feder periodisch erregt wird. Dieser ersten Feder entspricht das Speiseresonanzvolumen aus der Summe der Volumina des Speiseresonatorbehälters 6, von Verbindungsrohren 4, 5 zwischen dem Speiseresonatorbehälter 6 und den daran angeschlossenen Zylindern 2, sofern solche Verbindungsrohre 5 vorhanden sind, und des über einen Schwingungszyklus der Frischgasschwingungen hin gemittelten Volumens jedes während jeweils eines Schwingungszyklus zu dem Speiseresonatorbehälter 6 hin offenen Zylinderraumes.

Das über einen Schwingungszyklus der Frischgasschwingungen hin gemittelte Volumen jedes während jeweils eines Schwingungszyklus zu dem Speiseresonatobehälter 6 hin offenen Zylinderraumes berechnet sich im einzelnen wie folgt: Das Einlaßventil jedes Zylinders ist während eines Drehwinkels $\alpha$ der Kurbelwelle (z. B. während 150° KW) offen. Die Öffnungsperioden der Einlaßventile der an denselben Speiseresonatorbehälter angeschlossenen Zylinder treten über jede volle Umdrehung der Kurbelwelle gegeneinander zeitversetzt auf und überlappen einander nicht oder nicht wesentlich. Der Kolben jedes einzelnen Zylinders bewegt sich in diesem während der Öffnungsperiode, so daß die Größe des dabei an den Speiseresonatorbehälter angekoppelten Zylindervolumens während der Öffnungsperiode variiert. Wenn man beispielsweise über die Öffnungsperiode hin 50 aufeinanderfolgende Messungen des jeweils angekoppelten Zylindervolumens durchführt, ist das gemittelte Volumen jedes Zylinders die Summe der gemessenen Zylindervolumina, geteilt durch 50. Natürlich brauchen nicht wirkliche Messungen durchgeführt zu werden; vielmehr kann das "gemittelte Volumen" aufgrund der konstruktiven Auslegung der Brennkraftmaschine berechnet werden.

Falls sich die Öffnungsperioden, d. i. die Saugtakte, der an denselben Speiseresonatorbehälter angekoppelten Zylinder überhaupt nicht überlappen, ist das "gemittelte Volumen", dasjenige eines einzelnen Zylinders. Falls jedoch die Brennkraftmaschine so ausgelegt ist, daß Überlappungen bis zu gewissem Maße auftreten, ist das "gemittelte Volumen" die Summe des gemittelten Volumens des die jeweilige Schwingung während der Schwingungsperiode anregenden Zylinders und des gemittelten Volumens des anderen Zylinders, welches sich während der Überlappungszeitspanne ergibt.

Die an der ersten Feder, die entsprechend dem Vorstehenden von dem Speiseresonanzvolumen dargestellt wird, angekoppelte erste Masse entspricht derjenigen des im Speiseresonanzrohr 7 befindlichen Frischgases. Der zweiten Feder entspricht das Resonanzvolumen des Zwischenresonatorbehälters 8, der zweiten Masse derjenigen des im Zusatzresonanzrohr 11 befindlichen Frischgases und der dritten Feder das Volumen des Zusatzresonatorbehälters 12. An der ersten Resonanzstelle schwingen die beiden Massen mit gleicher Geschwindigkeit und Amplitude in der gleichen Richtung und an der zweiten Resonanzstelle mit gleicher Geschwindigkeit und Amplitude in entgegengesetzten Richtungen. In dem Zwischenresonatorbehälter 8 treten an der ersten Resonanzstelle nur geringe Druckschwankungen auf, so daß durch die "Steifigkeit dieser Feder" die Lage, d.h. der Zahlenwert, der ersten Resonanzstelle nicht beeinflußt wird. Jedoch treten in dem Zwischenresonatorbehälter 8 an der zweiten Resonanzstelle starke Druckschwankungen ähnlich denjenigen im Speiseresonatorbehälter 6 und im Zusatzresonatorbehälter 12 auf. Deswegen wird durch die "Steifigkeit" der von dem Volumen des Zwischenresonatorbehälters dargestellten Feder der Zahlenwert der zweiten Resonanzfrequenz wesentlich beeinflußt. Bei dieser zweiten Resonanzfrequenz wird daher das Frischgas in dem Speiseresonanzhor 7 während der Halbperioden, in welchen in dem Zwischenresonatorbehälter 8 das Druckmaximum liegt, zu dem Speiseresonatorbehälter 6 hin zusätzlich beschleunigt, wodurch der Druck in diesem erhöht wird und daher der Mitteldruck und Liefergrad in dem jeweiligen, zum Speiseresonatorbehälter 6 hin offenen Zylinderraum erhöht werden.

In diesem Zusammenhang wird jedoch darauf hingewiesen, daß gleiche bzw. entgegengesetzte "Richtungen" der Gasschwingungen nicht notwendig bedeutet, daß die Resonanzrohre 7, 11 geradlinig sind und/oder miteinander fluchten. Gleiche bzw. entgegengesetzte "Richtungen" der Gasschwingungen bezieht sich vielmehr auf die jeweiligen Gasströmungsrichtungen in den Resonanzrohren 7, 11: Wenn die Gasströmungen in beiden Resonanzrohren 7, 11 gleichzeitig in den Zwischenresonatorbehälter 8 hinein oder aus diesem heraus verlaufen, sind die Schwingungsrichtungen einander entgegengesetzt; im umgekehrten Fall sind die Schwingungsrichtungen gleich.

Gemäß der Erfindung ist der Zwischenresonatorbehälter 8 derart auszulegen, daß die Frischgasschwingungen in dem Speisereonanzrohr 7 und dem Zusatzresonanzrohr 11 bei einer zweiten Resonanzdrehzahl der Brennkraftmaschine einander entgegengesetzt sind. Für eine solche Auslegung des Zwischenresonatorlbehälters 7 kommt es darauf an, daß das Frischgasvolumen in dem Zwischenresonatorbehälter 7 bei der zweiten Resonanzdrehzahl als "Feder" wirken kann, die abwechselnd gespannt und entspannt wird, d.i. erreicht wird, daß die angestrebten starken Druckschwankungen im Zwischenresonatorbehälter 7 auftreten können. Hierzu sind auch die Strömungszustände in dem in den Zwischenresonatorbehälter 7 mündenden Frischgasanschluß 9 bzw. 15 maßgeblich. Es ist notwendige Bedingung, daß die Druckschwankungen im Zwischenresonatorbehälter 7 nicht durch das Vorhandensein des Frischgasanschlusses verhindert werden. Falls daher die Brennkraftmaschine 1 das Frischgas entsprechend Fig. 1 aus der Umgebungsatmosphäre direkt ansaugt, ohne daß das Frischgas von der Druckseite einer zusätzlichen Ladevorrichtung, insbesondere eines Abgasturboladers geliefert wird, gehört zur erfindungsgemäßen Auslegung des Zwischenbehälters als Zwischenresonatorbehälter 8 auch die Ausbildung des Frischgasanschlusses als Resonanzrohr 9 oder als lange Rohrleitung 9. Falls hingegen an den Frischgasanschluß entsprechend Fig. 2 ein Kompressor, insbesondere der Turbokompressor eines Abgasturboladers 14 angeschlossen ist, kann der konstante Massenstrom an der Druckseite des Kompressors ausreichen, um die Wirksamkeit des Zwischenbehälters als Resonatorbehälter 8 bei der zweiten Resonanzfrequenz zu gewährleisten. In diesem Fall kann daher der Frischgasanschluß auch als längeres oder kürzeres Druckrohr 15 des Kompressors gestaltet sein.

Von der Größe des Zwischenresonanzvolumens wird die zweite Resonanzdrehzahl bestimmt. Bei einem gegebenen Speiseresonanzsystem wird die zweite Resonanzdrehzahl nach der Größe des Zwischenresonanzvolumens ausgelegt. Von dem Verhältnis des Zwischenresonanzvolumens zu dem Speiseresonanzvolumen wird das Verhältnis der zweiten Resonanzdrehzahl zu der ersten Resonanzdrehzahl innerhalb des Betriebsdrehzahlbereiches der Brennkraftmaschine bestimmt. Das Zwischenresonanzvolumen ergibt sich aus dem Volumen des Zwischenresonatorbehälters 8 und gegebenenfalls zusätzlich eines mehr oder weniger großen Teils eines als Frischgasanschluß angeschlossenen Rohres 9, je nachdem, ob der Frischgasanschluß an einen zusätzlichen Ladekompressor angeschlossen ist oder nicht. Zu dem Zwischenresonanzvolumen kann auch dasjenige eines dem Frischgasnaschluß des Zwischenresonatorbehälters vorgeschalteten Behälters, wie des Ladeluft-Austrittsraumes eines Ladeluftkühlers oder des Austrittsraumes eines Luftfilters gehören. Jedenfalls läßt sich das Zwischenresonanzvolumen durch die Auswahl der Größe des Zwischenresonatorbehälters 8 und - gegebenenfalls - des daran angeschlossenen Frischgasrohres 9 und von dem Frischgasanschluß vorgeschalteten Behältern stets derart auslegen, daß in Anpassung an das oben definierte Speiseresonanzvolumen ein vorbestimmbares Verhältnis der beiden Resonanzdrehzahlen zustandekommt. Vorzugsweise beträgt dieses Verhältnis aus dem Zwischenresonanzvolumen zu dem Speiseresonanzvolumen mindestens 2, vorteilhaft höchstens 8, und liegt insbesondere im Bereich von 6.

Wie oben angegeben, müssen beide Resonanzdrehzahlen innerhalb des Betriebsdrehzahlbereiches liegen. Der größtmögliche Drehzahlabstand zwischen den beiden Resonanzdrehzahlen ist vorhanden, falls die erste Resonanzdrehzahl in den Bereich der untersten Drehzahl des Betriebsdrehzahlbereiches, und die zweite Resonanzdrehzahl in den Bereich der höchsten Drehzahl des Betriebsdrehzahlbereiches gelegt wird. Wie ebenfalls bereits angegeben, wird die erste Resonanzdrehzahl durch entsprechende Bemessung des Speiseresonanzsystems bestimmt, wohingegen der Ort der zweiten Resonanzdrehzahl von dem Verhältnis des Zwsichenresonanzvolumens zu dem Speiseresonanzvolumen bestimmt wird. Die Differenz zwischen der ersten und der zweiten Resonanzdrehzahl ist daher abhängig von dem Verhältnis des Zwischenresonanzvolumens zu dem Speiseresonanzvolumen, und je größer das Verhältnis ist, um so dichter liegen die beiden Resonanzdrehzahlen beieinander.

Es wurde gefunden, daß dann, wenn die beiden Resonanzdrehzahlen am weitesten voneinander entfernt sind, jedoch innerhalb des Betriebsdrehzahlbereiches liegen, das Verhältnis des Zwischenresonanzvolumens zu dem Speiseresonanzvolumen wenigstens 2 betragen muß. Bei einem höheren Verhältnis liegen die Resonanzdrehzahlen zunehmend dichter beieinander, bis sie praktisch zusammenfallen, was allerdings für die Zwecke der Erfindung kaum einen praktischen Wert hat. Versuche haben gezeigt, daß bei einem Verhältnis von 8 bis 10, falls die volle Länge des an den Zwischenresonanzbehälter angeschlossen Einlaßrohes dem Zwischenresonanzvolumen zugerechnet wird, noch eine ausnutzbare Differenz zwischen den beiden Resonanzdrehzahlen erhalten werden kann.

Durch die Erfindung ist es somit bei entsprechend nahe beieinanderliegenden Resonanzdrehzahlen auch möglich, das Frischgasleitungssystem derart auszulegen, daß die beiden, die jeweilige Resonanzdrehzahl enthaltenden Drehzahlbereiche, in welchen die Frischgasfällung mithilfe der Gasschwingungen vergrößert wird, einander teilweise überlappen, um eine möglichst ausgeglichene Füllungskurve bzw. Drehmomentenkurve zu erhalten. Bevorzugt wird das Frischgasleitungssystem derart ausgelegt, daß diejenige Drehzahl, bei welcher das Drehmomentmaximum der bekannten Brennkraftmaschine liegt, d.i. das Drehmomentmaximum, welches ohne Resonanzaufladung bzw. beim Vorhandensein eines solchen Frischgasleitungssystems vorliegen würde, welches nicht zur Verbesserung des Liefergrades beiträgt, zwischen den beiden Resonanzdrehzahlen liegt. Hierbei ist es besonders vorteilhaft, das Frischgasleitungssystem derart auszulegen, daß die zweite Resonanzdrehzahl nur wenig über derjenigen Drehzahl liegt, bei welcher das Drehmomentmaximum der bekannten Brennkraftmaschine liegt. Durch die Erfindung ist es jedoch aufgrund der Resonanzaufladung möglich, durch entsprechenden Eingriff in die Kraftstoffzufuhr nachtäglich ein neues Drehmomentmaximum einzustellen, um die Drehmomentenkurve unter Berücksichtigung der Resonanzaufladung neu zu formen.

In der bevorzugten Ausführungsform ist ferner die Resonanzfrequenz des Speiseresonanzsystems 2, 4, 5, 5, 7 wie nach der DE-B-29 49 790 wenigstens annähernd gleich der Resonanzfrequenz des Zusatzresonanzsystems 11, 12 wobei zusätzlich auch entsprechend der Fig. 1 und 2 der Durchmesser des Speiseresonanzrohres 7 und der des Zusatzresonanzrohres 11 gleich sind und die Mittellinien des Speiseresonanzrohres 7 und des Zusatzresonanzrohres 11 auf einer gemeinsamen Geraden liegen. Wenngleich aber diese Merkmale für eine optimale Auslegung des erfindungsgemäßen Frischgasleitungssystems vorteilhaft sein können, ist der erfindungsgemäße Vorschlag grundsätzlich auch wirksam, wenn diese Merkmale nicht verwirklicht sind.

Ferner wird es bevorzugt, daß bei Auslegung des Frischgasleitungssystems auf eine erste Resonanzdrehzahl im unteren Teil des Betriebsdrehzahlbereiches der Brennkraftmaschine das Speiseresonanzrohr 7, vorzugsweise auch das Zusatzresonanzrohr 11, an den oder nahe der Rohrenden einen zu diesen hin erweiterten Querschnitt aufweist bzw. aufweisen, wie dies in Fig. 2 für die Endabschnitte 7a, 11a, der Resonanzrohre 7, 11 als Beispiel gezeigt ist. Dies ist zur Verringerung der Abmessungen der Resonanzrohre aus der DE-A-32 32 366 an sich bekannt.

Bei einer Ausführungsform entsprechend Fig. 2, bei welcher an den Frischgasanschluß des Zwischenresonatorbehälters 8 eine Aufladevorrichtung 14, insbesondere ein Abgasturbolader, angeschlossen ist und die Einlaßöffnungen 4 der Zylinder 2 mit dem Speiseresonatorbehälter 6 über jeweils ein Verbindungsrohr 5 verbunden sind, wird es außerdem entsprechend der DE-C-22 45 732 bevorzugt, die Länge der Verbindungsrohre 5 so zu bemessen, daß sie, ausgedrückt in Metern, höchstens 1500 geteilt durch die Nenndrehzahl der Brennkraftmaschine 1 beträgt. Hierdurch kann verhindert werden, daß innerhalb des Betriebsdrehzahlbereiches der Brennkraftmaschine in den Verbindungsrohren 5 derartige Rohrschwingungen auftreten, durch welche die kombinierte Aufladung aus der Turboaufladung und der Resonanzaufladung beeinträchtigt sein könnte. Bei einer Ausführungsform hingegen, bei welcher die Einlaßöffnungen 4 der Zylinder mit dem Speiseresonatorbehälter 6 über jeweils ein Verbindungsrohr 5 verbunden sind und eine gesonderte Aufladungsvorrichtung, wie ein Abgasturbolader, nicht eingebaut ist, kann es vorteilhaft sein, die Verbindungsrohre 5 in ihrer Länge größer zu halten und derart auszuwählen, daß in den Verbindungsrohren 5 bei einer Drehzahl, die von den beiden Resonanzdrehzahlen des Frischgasleitungssystems bei der pneumatischen Resonanzaufladung verschieden ist, insbesondere oberhalb der letzteren liegt, die Frischgasfüllung des jeweils angeschlossenen Zylinders besonders im oberen Drehzahlbereich zusätzlich vergrößernde Rohrschwingungen zustandekommen.

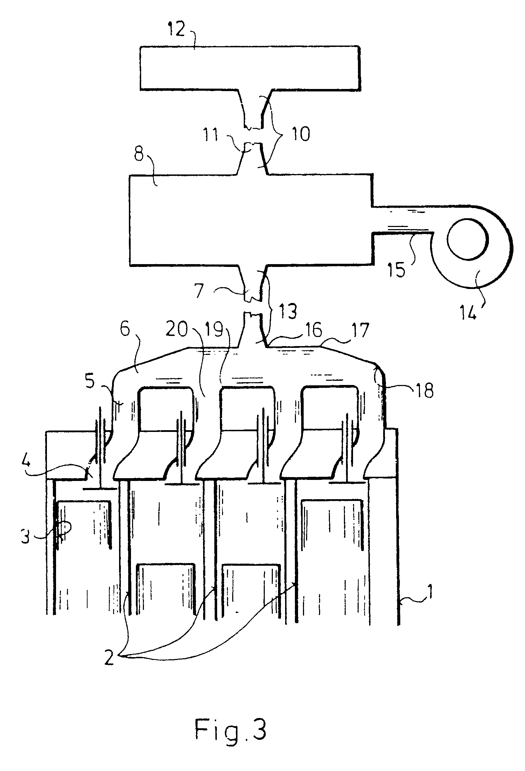

Zwecks Verminderung der Abmessungen des Frischgasleitungssystems kann es vorteilhaft sein, das Speiseresonanzvolumen möglichst zu verkleinern. Solch eine Ausführungsform zeigt Figur 3, wobei das Speiseresonanzrohr 7 mit einem sich konisch erweiternden Rohrendabschnitt 10 versehen ist, welcher sich über einen abgerundeten Rohrauslauf 16 an den Speiseresonatorbehälter 6 anschließt. Die Begrenzungswand 17 des Speiseresonatorbehälters 6 ist beim Anschluß 20 der Verbindungsrohre 5 der beiden äußeren Zylinder 2 der vierzylindrischen Zylindergruppe mit einer strömungstechnisch vorteilhaften Krümmung 18 versehen.

Die Übergänge 19 von den Zwischenwandabschnitten des Speiseresonatorbehälters 6 zwischen den Anschlüssen 20 der jeweils einander benachbarten Verbindungsrohre 5 zu diesem sind gut abgerundet ausgebildet. Diese Konstructionslösung ermöglicht, daß die Saugperioden der an den Speiseresonatorbehälter 6 angeschlossenen Zylinder 2 einander in geringem Maße überdecken. Dies kommt z.B. bei vierzylindrischen Reihenmotoren vor. Bei diesen haben die Saugöffnungen 4 der äußeren Zylinder 2 bzw. die Anschlüsse 20 der äußeren Verbindungsrohre 5 einen verhältnismäßig großen Abstand voneinander und das gewünschte kleine Speiseresonanzvolumen kann so verwirklicht werden, daß die Saugöffnungen 4 bzw. der Speiseresonatorbehälter - dessen Länge durch die Lage der Anschlüsse bestimmt ist - mit einer Querschnittsfläche kleinen Durchmessers ausgebildet werden. Um übertriebene Strömungsverluste zu vermeiden, ist es zweckmäßig, einen solchen Speiseresonatorbehälter 6 mit einer strömungstechnisch vorteilhaften abgerundeten Begrenzungswand 17 und gut abgerundeten Anschlüssen 20 zu gestalten.

Vorteilhaft kann das Frischgasleitungssystem nach den Figuren 1 bis 3 auch bei solchen Kolbenverbrennungsmotoren angewendet werden, wo mehrere, höchstens aus vier Zylindern bestehende Zylindergruppen gebildet werden können, falls die an diese angeschlossenen inneren Resonatorbehälter nicht miteinander verbunden sind. So kann z.B. der 8-zylindrige V-Motor ausgebildet sein, falls er mit zwei unabhängigen Abgasturboladern versehen ist, die je ein Frischgasleitungssytem bzw. je vier Zylinder unabhängig voneinander laden.

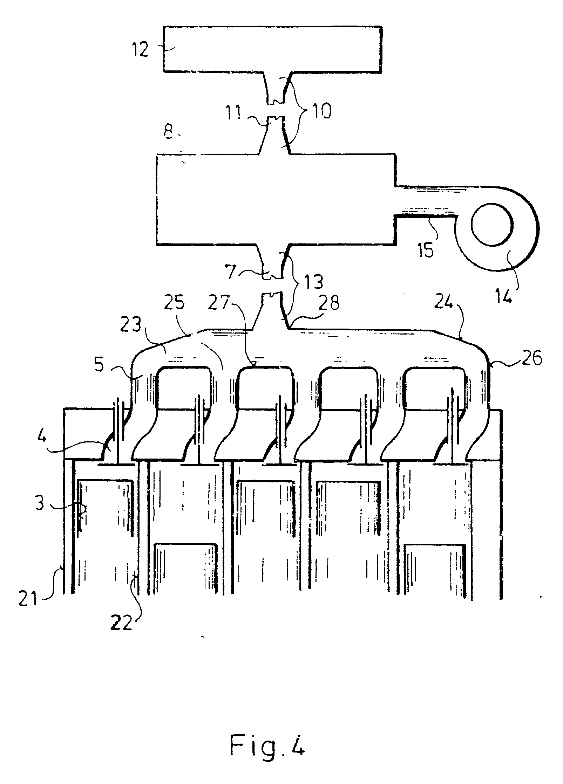

Figur 4 zeigt die Anwendung der Erfindung auf eine Kolbenbrennkraftmaschine mit fünf Zylindern.Die Zylinder 22 der Viertakt-Kolbenbrennkraftmaschine 21 mit fünf Zylindern haben - gemessen am Drehwinkel der Kurbelwelle - einen Zündabstand von 144°, das heißt die Ansaugperioden der Zylinder 22 des Motors 21 überlappen einander noch nicht wesentlich. Die Ansaugöffnungen 4 der Zylinder 22 der von der mit ihren Ansaugperioden einander noch nicht wesentlich überlappenden Zylindern 22 gebildeten Zylindergruppe aus fünf Zylindern sind unter Zwischenschaltung jeweils eines Verbindungsrohres 5 für jeden einzelnen Zylinder 22 an einem gemeinsamen Speiseresonatorbehälter 23 angeschlossen, in den ein Speiseresonanzrohr 7 mündet, durch welches die Frischgaszufuhr erfolgt. Weiterhin ist ein aus einem Zusatzresonatorbehälter 12 und einem in diesen mündenden Zusatzresonanzrohr 11 bestehendes Zusatzresonanzsystem vorgesehen, wobei das erwähnte Zusatzresonanzrohr 11 mit dem Speiseresonanzrohr 7 über eine Zwischenresonatorbehälter 8 verbunden ist. Am Zwischenresonatorbehälter 8 ist der Kompressor eines Turboladers 14 über ein Druckrohr 15 angeschlossen. Das in der oben festgelegten Weise berechnete Verhältnis des Zwischenresonanzvolumens zum Speiseresonanzvolumen beträgt vorzugsweise 6. Die Endabschnitte 10 bzw. 13 der Resonanzrohre 7, 11 sind sich gegen die Rohrenden hin diffusorartig verbreitend ausgebildet, wodurch die Länge der Resonanzrohre 7, 11 auch ohne Veränderung der Resonanzstellen des Frischgasleitungssystems vermindert werden kann. Die Länge der die Ansaugöffnungen 4 der Zylinder 22 mit dem Speiseresonatorbehälter 23 einzeln verbindenden Verbindungsrohre 5 ist derart bemessen, daß die Länge der Verbindungsrohre in Metern jeweils 1500 geteilt durch die Nenndrehzahl der Brennkraftmaschine nicht überschreitet.

Dadurch kann verhindert werden, daß innerhalb des Betriebsdrehzahlbereiches der Kolbenbrennkraftmaschine 1 in den Verbindungsrohren 5 derartige Rohrschwingungen auftreten, die die kombinierte Ladung der Turboladung und der Resonanzaufladung nachteilig beeinflussen würden.

Im Gegensatz dazu jedoch kann es bei einer Ausführungsform vorteilhaft sein, bei welcher die Ansaugöffnungen 4 der Zylinder 22 mit dem Speiseresonatorbehälter 23 jeweils über ein Verbindungsrohr 5 verbunden sind und eine derartige Ladevorrichtung, wie der Abgas-Turbolader nicht eingebaut ist, wenn die Länge der Verbindungsrohre 5 größer und derart gewählt ist, daß in den Verbindungsrohren 5 bei einer Drehzahl, die von den beiden bei der pneumatischen Resonanzaufladung entstehenden Resonanzdrehzahlen des Frischgasleitungssystems abweicht, insbesondere oberhalb derselben liegt, bei der Frischgasaufladung des jeweils angeschlossenen Zylinders 22 insbesondere im oberen Drehzahlbereich die Aufladung zusätzlich erhöhende Rohrschwingungen entstehen.

Im Falle der Reihenanordnung bei einer Kolbenbrennkraftmaschine 21 mit fünf Zylindern ist der Abstand zwischen den Ansaugöffnungen 4 der beiden äußersten Zylinder 22 bzw. zwischen den beiden äußersten Verbindungsrohren 5 relativ groß, so daß ein Speiseresonatorbehälter 23 mit günstigen Abmessungen ausgebildet werden kann.

Die äußere Längswand 24 des Speiseresonatorbehälters 23 ist bei dem Abschluß 25 der Verbindungsrohre 5 der beiden äußersten Zylinder 22 mit einer strömungstechnisch günstigen Krümmung 26 ausgebildet. Die innere Längswand 27 Speiseresonatorbehälters 23 ist jeweils zwischen den Anschlüssen 25 der jeweils benachbarten Verbindungsrohre 5 gut abgerundet ausgebildet und in ähnlicher Weise ist der sich zum Speiseresonanzbehälter 23 hin konisch erweiternde Endabschnitt zwecks Erhöhung des strömungstechnischen Wirkungsgrades über ein abgerundetes Rohrende 28 am Speiseresonanzbehälter 23 angeschlossen.

Das Frischgasleitungssystem nach Fig. 4 kann vorteilhaft auch bei derartigen Kolbenbrennkraftmaschinen verwendet werden, wo mehrere aus je fünf Zylindern bestehende Zylindergruppen gebildet werden können, wenn die daran angeschlossenen Zwischenresonatorbehälter nicht miteinander verbunden sind. So z.B kann der V-Motor mit zehn Zylindern ausgebildet sein, wenn dieser mit zwei unabhängigen Abgas-Turboladern versehen ist, die voneinander unabhängig je ein Frischgasleitungssystem mit je fünf Zylindern speisen.

## Patentansprüche

1.  Kolbenbrennkraftmaschine mit durch Frischgas-Resonanzschwingungen gesteigertem Liefergrad, mit einem Frischgasleitungssystem, welches ein Speiseresonanzsystem mit einem Speiseresonatorbehälter (6), an welchen höchstens fünf, vorzugsweise höchstens vier Zylinder (2), deren Ansaugperioden einander nicht oder nicht wesentlich überlappen, mit ihren Einlaßöffnungen (4) direkt angeschlossen sind, und einem in den Speiseresonatorbehälter (6) mündenden Speiseresonanzrohr (7) sowie ein Zusatzresonanzsystem aus einem geschlossenen Zusatzresonatorbehälter (12) und einem in diesen mündenden Zusatzresonanzrohr (11) aufweist, welches über einen Zwischenbehälter (8), in welchen ein Frischgasanschluß (9, 15) mündet, an das Speiseresonanzrohr (7) angeschlossen ist, wobei das Speiseresonanzsystem und das Zusatzresonanzystem in ihren Abmessungen derart aufeinander abgestimmt sind, daß bei einer vorbestimmten Resonanzdrehzahl im Betriebsdrehzahlbereich der Brennkraftmaschine (1) die durch die diskontinuierliche Saugwirkung der Zylinder (2) im Frischgasleitungssystem angeregten Frischgasschwingungen in dem Speiseresonanzrohr (7) und dem Zusatzresonanzrohr (11) unter Steigerung des Liefergrades phasengleich sind, dadurch gekennzeichnet, daß der Zwischenbehälter als derartiger Zwischenresonatorbehälter (8) ausgelegt ist, daß die Frischgasschwingungen in dem Speiseresonanzrohr (7) und dem Zusatzresonanzohr (11) bei einer vorbestimmten zweiten Resonanzdrehzahl im Betriebsdrehzahlbereich der Brennkraftmaschine (1) unter Steigerung des Liefergrades gegenphasig sind.

2.  Kolbenbrennkraftmaschine nach Anspruch 1, dadurch gekennzeichnet, daß der Zwischenresonatorbehälter (8) ein den Frischgaszuführanschluß bildendes Resonanzrohr (9) aufweist.

3.  Kolbenbrennkraftmaschine nach Anspruch 1, dadurch gekennzeichnet, daß der Frischgaszuführanschluß als langes Rohr (9) ausgebildet ist.

4.  Kolbenbrennkraftmaschine nach Anspruch 1, dadurch gekennzeichnet, daß der Frischgaszuführanschluß als Druckrohr (15) eines Kompressors (14) ausgebildet ist.

5. Kolbenbrennkraftmaschine nach einem der Ansprüche 1 bis 4, dadurch gekennzeichnet, daß das Verhältnis aus dem Zwischenresonanzvolumen zu dem Speiseresonanzvolumen, welches als die Summe des Volumens des Speiseresonatorbehälters (6), der Volumina der Verbindungsrohre (7) zwischen dem Speiseresonatorbehälter (6) und den daran angeschlossenen Zylindern (2), sofern solche Verbindungsrohre vorhanden sind, und des über die Öffnungsperiode jedes während eines Schwingungszyklus der Frischgasschwingungen zu dem Speiseresonatorbehälter (6) hin offenen Zylinderraumes hin gemittelten Durchschnittsvolumens des offenen Zylinderraumes definiert ist, mindestens 2 beträgt.

6. Kolbenbrennkraftmaschine nach Anspruch 5, dadurch gekennzeichnet, daß das Verhältnis aus dem Zwischenresonanzvolumen zu dem Speiseresonanzvolumen höchstens 8 beträgt, vorzugsweise im Bereich von 6 liegt.

7. Kolbenbrennkraftmaschine nach Anspruch 1, dadurch gekennzeichnet, daß das Frischgasleitungssystem derart ausgelegt ist, daß die beiden, die jeweilige Resonanzdrehzahl enthaltenden Drehzahlbereiche, in welchen der Liefergrad aufgrund der Gasschwingungen vergrößert wird, einander teilweise überlappen.

8. Kolbenbrennkraftmaschine nach Anspruch 1, dadurch gekennzeichnet, daß das Frischgasleitungssystem derart ausgelegt ist, daß diejenige Drehzahl, bei welcher das normale Drehmomentmaximum der Brennkraftmaschine liegt, zwischen den beiden Resonanzdrehzahlen liegt.

9. Kolbenbrennkraftmaschine nach Anspruch 8, dadurch gekennzeichnet, daß das Frischgasleitungssystem derart ausgelegt ist, daß die zweite Resonanzdrehzahl wenig über derjenigen Drehzahl liegt, bei welcher das normale Drehmomentmaximum der Brennkraftmaschine liegt.

10. Kolbenbrennkraftmaschine nach Anspruch 1, dadurch gekennzeichnet, daß die Resonanzfrequenz des Speiseresonanzsystems (2, 5, 6, 7) wenigstens annähernd gleich der Resonanzfrequenz des Zusatzresonanzsystems (11, 12) ist.

11. Kolbenbrennkraftmaschine nach Anspruch 10, dadurch gekennzeichnet, daß der Durchmesser des Speiseresonanzrohres und der des Zusatzresonanzrohres gleich sind und die Mittellinien des Speiseresonanzrohres und des Zusatzresonanzrohres auf einer gemeinsamen Geraden liegen.

12. Kolbenbrennkraftmaschine nach Anspruch 1, dadurch gekennzeichnet, daß das Speiseresonanzohr (7), vorzugsweise auch das Zusatzresonanzrohr (11), an den oder nahe der Rohrenden einen zu diesen hin erweiterten Querschnitt aufweist bzw. aufweisen.

13. Kolbenbrennkraftmaschine nach den Ansprüchen 1 und 4, dadurch gekennzeichnet, daß bei einer Ausführungsform, bei welcher an den Frischgasanschluß (15) des Zwischenresonatorbehälters (8) eine Aufladungsvorrichtung, insbesondere ein Turbolader (14), angeschlossen ist und die Einlaßöffnungen (4) der Zylinder (2) mit dem Speiseresonatorbehälter (6) über jeweils ein Verbindungsrohr (5) verbunden sind, die Länge der Verbindungsrohre (5) in Metern höchstens 1500 geteilt durch die Nenndrehzahl der Brennkraftmaschine beträgt.

14. Kolbenbrennkraftmaschine nach den Ansprüchen 1 und 2 oder 1 und 3, dadurch gekennzeichnet, daß bei einer Ausführungsform, bei welcher die Einlaßöffnungen (4) der Zylinder (2) mit dem Speiseresonatorbehälter (6) über jeweils ein Verbindungsrohr (5) verbunden sind, die Länge der Verbindungsrohre (5) derart gewählt ist, daß in diesen bei einer Drehzahl, die von den beiden Resonanzdrehzahlen verschieden ist, die Frischgasfüllung des jeweils angeschlossenen Zylinders (2) vergrößernde Rohrschwingungen zustandekommen.

**Claims**

1. Piston-type internal combustion engine with increased charging efficiency due to fresh gas resonance oscillations, with an intake gas conduit system, comprising a feed resonance system including a feed resonator vessel (6) connected directly with the intake ports (4) of at most five, preferably at most four cylinders (2) the suction strokes of which do not or not substantially overlap each other and a feed resonance pipe (7) opening into the feed resonator vessel (6), and comprising an auxiliary resonance system including a closed auxiliary resonator vessel (12) and an auxiliary resonance pipe (11) opening therein and being connected to the feed resonance pipe (7) through an intermediate vessel (8) into which an intake gas connection (9, 15) opens, wherein the feed resonance system and the auxiliary resonance system are adapted in their dimensions in such a way, that at a predetermined resonance speed in the operational speed range of the internal combustion engine (1) the intake gas oscillations generated in the intake gas conduit system by the intermittent suction effect of the cylinders (2) are in phase in the feed resonance pipe (7) and in the auxiliary resonance pipe (11), resulting in an increase of the charging efficiency, characterised in that the intermediate vessel is designed as such an intermediate resonator vessel (8), that at a predetermined second resonance speed in the operational speed range of the internal combustion engine the intake gas oscillations in the feed resonance pipe (7) and in the auxiliary resonance pipe (11) are of opposite phase, resulting in an increase of the charging efficiency.

2. Piston-type internal combustion engine as claimed in claim 1, characterised in that the intermediate resonator vessel (8) comprises a resonance pipe (9) forming the intake gas inlet connection.

3. Piston-type internal combustion engine as claimed in claim 1, characterised in that the intake gas inlet connection is formed as a long pipe (9).

4. Piston-type internal combustion engine as claimed in claim 1, characterised in that the intake gas inlet connection is formed as a pressure pipe (15) of a compressor (14).

5. Piston-type internal combustion engine as claimed in one of claims 1 to 4, characterised in that the ratio of the intermediate resonance volume to the feed resonance volume, defined as the sum of the volume of the feed resonance vessel (6), of the volumes of the connecting pipes (7) between the feed resonator vessel (6) and the cylinders (2) connected on it, in case such connecting pipes are present, and of the average volume of the open cylinder chamber averaged during the opening period of each cylinder chamber being open to the feed resonator vessel (6) during one cycle of oscillation of the intake gas oscillations, is at least 2.

6. Piston-type internal combustion engine as claimed in claim 5, characterised in that the ratio of the intermediate resonance volume to the feed resonance volume is maximum 8, preferably in the range of 6.

7. Piston-type internal combustion engine as claimed in claim 1, characterised in that the intake gas conduit system is designed in such a way, that the two speed ranges, which contain the respective resonance speed and in which the charging efficiency is increased due to the gas oscillations, partially overlap each other.

8. Piston-type internal combustion engine as claimed in claim 1, characterised in that the intake gas conduit system is designed in such a way, that the speed, at which the internal combustion engine has its normal torque maximum, is between the two resonance speeds.

9. Piston-type internal combustion engine as claimed in claim 8, characterised in that the intake gas conduit system is designed in such a way, that the second resonance speed is slightly above the speed at which the internal combustion engine has its normal torque maximum.

10. Piston-type internal combustion engine as claimed in claim 1, characterised in that the resonance frequency of the feed resonance system (2, 5, 6, 7) is at least approximately equal to the resonance frequency of the auxiliary resonance system (11, 12).

11. Piston-type internal combustion engine as claimed in claim 10, characterised in that the diameter of the feed resonance pipe and that of the auxiliary resonance pipe are equal and the central lines of the feed resonance pipe and the auxiliary resonance pipe are in alignment with one another.

12. Piston-type internal combustion engine as claimed in claim 1, characterised in that the feed resonance pipe (7), preferably the auxiliary resonance pipe (11) too, comprises or comprise, respectively, at or near each end of the pipe a section increasing towards this end.

13. Piston-type internal combustion engine as claimed in claims 1 and 4, characterised in that in case of an embodiment, in which a charging device, particulary a turbocharger (14), is connected to the intake gas connection (15) of the intermediate resonator vessel (8) and the intake ports (4) of the cylinders (2) are connected to the feed resonator vessel (6) each by a connecting pipe (5), the length of the connecting pipes (5), expressed in meters, is maximum 1500 divided by the nominal speed of the internal combustion engine.

14. Piston-type internal combustion engine as claimed in claims 1 and 2 or 1 and 3, characterised in that in case of an embodiment, in which the intake ports (4) of the cylinders (2) are connected to the feed resonator vessel (6) each by a connecting pipe (5), the length of the connecting pipes (5) is selected in such a manner, that therein, at a speed which is different from both resonance speeds, pipe oscillations appear, which increase the intake gas charging of the respectively connected cylinders (2).

## Revendications

1. Moteur à combustion du type à pistons à taux de remplissage augmenté par des oscillations résonantes de l'admission, muni d'un système de tubulure d'admission qui comporte un système de résonance d'admission muni d'un réservoir de résonance d'admission (6) auquel sont raccordés directement par leurs orifices d'admission (4) au plus cinq, de préférence au plus quatre cylindres (2) dont les périodes d'aspiration ne se recouvrent mutuellement pas ou sensiblement pas, et un tube de résonance d'admission (7) débouchant dans le réservoir de résonance d'admission (6), ainsi qu'un système de résonance supplémentaire constitué d'un réservoir de résonance supplémentaire fermé (12) et d'un tube de résonance supplémentaire débouchant dans celui-ci, et qui est raccordé au tube de résonance d'admission (7) par un réservoir intermédiaire (8) dans lequel débouche une tubulure d'admission (9, 15), le système de résonance d'admission et le système de résonance supplémentaire étant déterminés en ce qui concerne leurs dimensions de telle façon que, pour une vitesse de rotation de résonance prédéterminée dans la zone des vitesses de rotation de service du moteur à combustion (1), les oscillations de l'admission amorcée par l'effet d'aspiration discontinue des cylindres (2) dans le système de tubulures d'admission soient de même phase dans le tube de résonance d'admission (7) et dans le tube de résonance supplémentaire (11) au cours de l'augmentation du taux de remplissage, caractérisé en ce que le réservoir intermédiaire est dimensionné comme le réservoir de résonance intermédiaire (8), en ce que les oscillations à l'admission dans le tube de résonance d'admission (7) et dans le tube de résonance supplémentaire (11) sont en opposition de phase pour une deuxième vitesse de rotation prédéterminée dans la zone des vitesses de rotation de service du moteur à combustion (1) au cours de l'augmentation du taux de remplissage.

2. Moteur à combustion du type à pistons selon la revendication 1, caractérisé en ce que le réservoir de résonance intermédiaire (8) comporte un tube de résonance (9) constituant le raccord de tubulure d'admission.

3. Moteur à combustion du type à pistons selon la revendication 1, caractérisé en ce que le raccord de tubulure d'admission est réalisé sous la forme d'un long tube (9).

4. Moteur à combustion du type à pistons selon la revendication 1, caractérisé en ce que le raccord de tubulure d'admission est réalisé sous la forme du tube de pression (15) d'un compresseur (14).

5. Moteur à combustion du type à pistons selon l'une des revendications 1 à 4, caractérisé en ce que le rapport entre le volume de résonance intermédiaire et le volume de résonance d'admission qui est défini comme étant la somme du volume du réservoir de résonance d'admission (6), du volume du tube de liaison (7) entre le réservoir de résonance d'admission (6) et le cylindre (2) qui lui est raccordé, pour autant que de tels tubes de liaison existent, et du volume moyen de la chambre de cylindre ouverte déterminée pour la période d'ouverture de chaque chambre de cylindre ouverte vers le réservoir de résonance d'admission (6) pendant un cycle d'oscillation des oscillations d'admission, atteint au moins deux.

6. Moteur à combustion du type à pistons selon la revendication 5, caractérisé en ce que le rapport entre le volume de résonance intermédiaire et le volume de résonance d'admission atteint au plus huit, et se situe de préférence au voisinage de six.

7. Moteur à combustion du type à pistons selon la revendication 1, caractérisé en ce que le système de tubulure d'admission est dimensionné de telle façon que les deux zones de vitesse de rotation contenant les vitesses de rotation de résonance en cause au cours desquelles le taux de remplissage est augmenté par suite des oscillations gazeuses, se recouvrent partiellement l'une l'autre.

8. Moteur à combustion du type à pistons selon la revendication 1, caractérisé en ce que le système de tubulure d'admission est dimensionné de telle façon que la vitesse de rotation pour laquelle on obtient le couple normal maximum du moteur à combustion, est située entre les deux vitesses de rotation de résonance.

9. Moteur à combustion du type à pistons selon la revendication 8, caractérisé en ce que le système de tubulure d'admission est dimensionné de telle façon que la deuxième vitesse de rotation de résonance est située très légèrement au-dessus de la vitesse de rotation pour laquelle on obtient le couple moteur maximum du moteur à combustion.

10. Moteur à combustion du type à pistons selon la revendication 10, caractérisé en ce que la fréquence de résonance du système de résonance d'admission (2, 5, 6, 7) est sensiblement proche de la fréquence de résonance du système de résonance supplémentaire (11, 12).

11. Moteur à combustion du type à pistons selon la revendication 10, caractérisé en ce que le diamètre du tube de résonance d'admission et celui du tube de résonance supplémentaire sont identiques et en ce que la ligne médiane du tube de résonance d'admission et celle du tube de résonance supplémentaire sont situées sur une même droite.

12. Moteur à combustion du type à pistons selon la revendication 1, caractérisé en ce que le tube de résonance d'admission (7), de préférence également le tube de résonance supplémentaire (11), présente(nt) une section qui s'élargit sur ceux-ci ou à proximité des extrémités de tube de l'un de ceux-ci.

13. Moteur à combustion du type à pistons selon les revendications 1 et 4, caractérisé en ce que, dans un mode de réalisation dans lequel est relié, au raccord d'admission (15) du réservoir de résonance intermédiaire (8), un dispositif de suralimentation, en particulier une suralimentation à turbo (14), et où les orifices d'admission (4) des cylindres (2) sont reliées au réservoir de résonance d'admission (6) chaque fois par un tube de liaison (5), la longueur du tube de liaison (5) exprimée en mètres est au plus égale à 1 500, divisée par le nombre nominal de tours par minute du moteur à combustion.

14. Moteur à combustion du type à pistons selon les revendications 1 et 2 ou 1 et 3, caractérisé en ce que, pour un mode de réalisation dans lequel les orifices d'admission (4) du cylindre (2) sont reliées au réservoir de résonance d'admission (6), chaque fois via une tubulure de liaison (5), la longueur de cette tubulure de liaison (5) est déterminée de telle façon qu'il s'établisse dans cette tubulure, pour une vitesse de rotation qui est différente des deux vitesses de rotation de résonance, des vibrations de tubulure augmentant le remplissage à l'admission du cylindre correspondant (2) qui lui est raccordé.

Fig.1

Fig.2

Fig.3

Fig.4